# EUROPEAN PATENT APPLICATION

(11) **EP 1 177 887 A2**
(43) Date of publication of application: **06.02.2002**
(21) Application number: 01110614.3
(22) Date of filing: 30.04.2001
(51) Int. Cl.: B30B 15/00

(54) **Precision device molding machine and method of molding by using it**

(30) Priority: 04.08.2000 JP 2000237031
(71) Applicant: MATSUSHITA ELECTRIC INDUSTRIAL CO., LTD., Kadoma-shi, Osaka 571-8501 (JP)
(72) Inventor: Kamohara, Kiyotaka, Hirakata-shi, Osaka 573-0165 (JP); Fujii, Takeyuki, Toyonaka-shi, Osaka 560-0861 (JP); Kaito, Hiroaki, Suita-shi, Osaka 565-0832 (JP)
(74) Representative: Grünecker, Kinkeldey, Stockmair & Schwanhäusser Anwaltssozietät

(57) **Abstract**

The present invention provides a precision device molding machine and a molding method to make it possible for an adjustment of parallelism to be performed with a high degree of accuracy and excellent workability. The precision device molding machine includes a parallelism adjustment mechanism held by a supporting plate (3,7,8,8a,15), a pressure applying plate (1) that is movable up and down, a lower die (13b) disposed on the upper surface of the pressure applying plate and an upper die (13a) disposed on the parallelism adjustment mechanism, The parallelism adjustment mechanism includes a pressure receiving member (3,15), an adjusting plate (8,8a), a transmitting member (7,7a) disposed between the pressure receiving member and the adjusting plate, a fixed fulcrum (7) and an operating member (10,10a). By having the operating member (10,10a) manipulated, the adjusting plate (8,8a) is moved, the pressure receiving member (3,15) is slanted via the transmitting member (7,7a) with the fixed fulcrum (7) acting as a pivot and the gradient of the pressure receiving member (3,15) is adjusted, thereby allowing the parallelism between the upper die (13a) and the lower die (13b) to be adjusted and allowing a compound in a cavity formed with the molding die to be molded. Preferably, the adjusting plate has two adjusting plates (8,8a) and the respective adjusting plates are located on the apexes of a regular triangle and each respective adjusting plate (8,8a) has a slanting surface.

## Description

### Technical Field

The present invention relates to a molding machine and more specifically relates to a precision device molding machine for molding precision devices and the like, and a method of molding by using it.

### Background Art

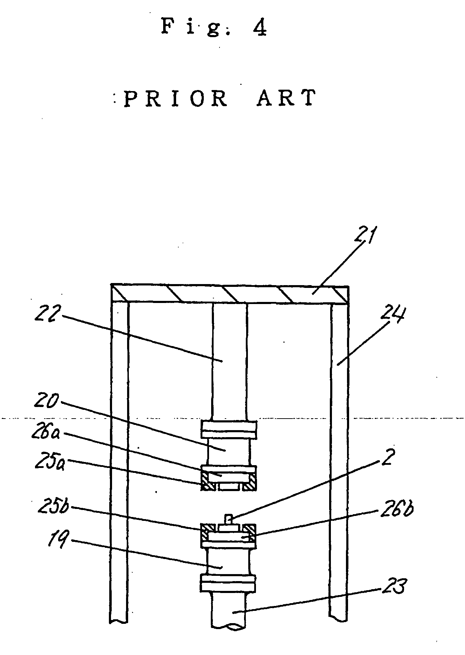

A description is given to a prior art precision device molding machine with reference to a drawing. Fig. 4 is a cross-sectional view of the main part of a prior art precision device molding machine. The prior art precision device molding machine comprises a pressure applying block 19, a pressure receiving block 20, a plate 21, an upper shaft 22, a lower shaft 23, a side plate 24, an upper die holder 25a, a lower die holder 25b, an upper die 26a and a lower die 26b.
The pressure applying block 19 is fixed onto the upper end of the lower shaft 23 and disposed so as to be freely movable vertically. The pressure applying block 19 is provided with a reference plane. The pressure receiving block 20 is attached to the lower surface of the plate 21 via the upper shaft 22. The upper die 26a is attached in place by means of the upper die holder 25a and the lower die 26b is attached in place by means of the lower die holder 25b. The upper die 26a and lower die 26b form a molding die.
A compound 2 is press molded to conform to a shape formed by the upper die 26a and lower die 26b.

For a precision device, to keep precise dimensions is essential. For example, an optical device acting as a precision device requires a high degree of dimensional accuracy to achieve. When an optical device is molded as a molded product, the ultimate dimensional accuracy of the optical device is determined by parallelism between the upper die 26a and the lower die 26b. Therefore, by having the entire pressure receiving block 20 slanted against the pressure applying block 19 having a reference plane while a spacer with a predetermined thickness being sandwiched between the plate 21 and the side plate 24, the parallelism between the upper die 26a and the lower die 26b, both forming a molding die together, has been adjusted. In this case, the spacer has a thickness determined according to the purpose to be achieved.

However, with the foregoing prior art molding machine, every time the adjustment in parallelism is performed, the spacer has to be inserted into the molding die, thereby making it rather difficult for the parallelism of the molding die to be adjusted with a high degree of accuracy and with excellent workability because of the errors created by sandwiching the spacer between the dies, the thermal distortion of the spacer, the thermal distortion of the molding die itself and the like.

The present invention provides a precision device molding machine whereby parallelism of a molding die is allowed to be adjusted with a high degree of accuracy and also with excellent workability.

### Summary of the Invention

A precision device molding machine of the present invention comprises:
(a) a supporting plate;
(b) a parallelism adjustment mechanism held by the supporting plate;
(c) a pressure applying plate that is movable vertically;
(d) a lower die disposed on the upper surface of the pressure applying plate;
(e) a molding control means; and
(f) an upper die disposed on the parallelism adjustment mechanism.

When the pressure applying plate is moved vertically, the upper die and lower die are put together to engage each other, thereby forming a molding die.

The parallelism adjustment mechanism comprises a pressure receiving member, an adjusting plate, a transmitting member, a fixed fulcrum and an operating member.

The transmitting member is disposed between the pressure receiving member and the adjusting plate.

The fixed fulcrum has a point of the pressure receiving member and the supporting plate anchored securely.

When the operating member is manipulated, the adjusting plate is moved, thereby making the pressure receiving member move via the transmitting member with the fixed fulcrum serving as a pivot.

Accordingly, the gradient of the pressure receiving member is adjusted and hence the parallelism between the upper die and the lower die is fine tuned, thereby molding a compound in a cavity formed with the molding die into a shape.

A molding method of a precision device according to the present invention uses a molding machine.
The molding machine comprises:
(a) a supporting plate;
(b) a parallelism adjustment mechanism held by the supporting plate,
   wherein the parallelism adjustment mechanism comprises a pressure receiving member, an adjusting plate with a slanting surface, a transmitting member, a fixed fulcrum and an operating member;
(c) an upper die disposed on the lower surface of the pressure receiving member;
(d) a pressure applying plate that is movable vertically;
(e) a lower die disposed on the upper surface of the pressure applying plate;
(f) a molding control means; and
(g) a fixing member to have the pressure receiving member fixed onto the supporting plate.
The molding method comprises the steps of:
(1) adjusting the gradient of the pressure receiving member,
   wherein the step of adjusting the gradient of the pressure receiving member comprises a step of manipulating the operating member,
   wherein, by manipulating the operating member, the adjusting plate shi is moved,
   wherein, as the adjusting plate is moved, the pressure receiving member is slanted via the transmitting member with the fixed fulcrum acting as a pivot, and
   wherein the gradient of the pressure receiving member is controlled and the parallelism between the upper die and the lower die is adjusted;
(2) fixing securely the pressure receiving member onto the supporting plate while the gradient of the pressure receiving member being adjusted by the parallelism adjustment mechanism;
(3) lifting the pressure applying plate to have the lower die and upper die engaged with each other and molding a compound in a molding die formed of the lower die and upper die into a shape; and
(4) taking out the provisional molded product as described by moving down the lower die.
   Preferably, the molding method further comprises the steps of:
(5) measuring the dimensions of the provisional molded product;
(6) making a comparison between the measured dimensions of the provisional molded product and the desired dimensions and repeating the steps of adjusting the gradient of the pressure receiving member; and
(7) molding the compound into a shape by operating the molding machine after repeating the steps of adjusting the gradient of the pressure receiving member.

Preferably, the adjusting plate has a slanting surface with a slanting angle and the transmitting member is moved on the slanting surface as the adjusting plate is moved, thereby causing the pressure receiving member to be slanted.

Preferably, the transmitting member comprises a true sphere and the pressure receiving member is slanted via the true sphere as the adjusting plate is moved.

Preferably, the adjusting plate has two adjusting plates of a first adjusting plate and a second adjusting plate, the first adjusting plate and second adjusting plate are located at positions apart from each other and the distance between the first adjusting plate and the fixed fulcrum equals to the distance between the second adjusting plate and the fixed fulcrum.

Accordingly, the parallelism of the molding die is allowed to be adjusted with a high degree of accuracy and excellent workability. As a result, a precision device with excellent dimensional accuracy can be realized.

### Brief Description of the Drawings

Fig. 1 is a perspective view of the main part of a precision device molding machine in a first exemplary embodiment of the present invention.

Fig. 2 (a) is a plan view of the essential part of a parallelism adjustment mechanism of the molding machine of Fig. 1 and Fig. 2 (b) is a cross-sectional view of the main part of the parallelism adjustment mechanism.

Fig. 3 (a) is a plan view of the essential part of a parallelism adjustment mechanism of a precision device molding machine in a second exemplary embodiment of the present invention and Fig. 3 (b) is a cross-sectional view of the main part of the molding machine.

Fig. 4 is a cross-sectional view of the essential part of a prior art precision device molding machine.

### Detailed Description of the Invention

A precision device molding machine of the present invention comprises:
(a) a supporting plate;
(b) a parallelism adjustment mechanism held by the supporting plate;
(c) a pressure applying plate that is movable vertically;
(d) a lower die disposed on the upper surface of the pressure applying plate;
(e) a molding control means; and
(f) an upper die disposed on the parallelism adjustment mechanism.

When the pressure applying plate is moved upward, the upper die and lower die are put together to engage each other, thereby forming a molding die.

The parallelism adjustment mechanism comprises a pressure receiving member, an adjusting plate, a transmitting member, a fixed fulcrum and an operating member.

The transmitting member is disposed between the pressure receiving member and the adjusting plate.

The fixed fulcrum has a point of the pressure receiving member and the supporting plate anchored securely.

When the operating member is manipulated, the adjusting plate is moved, thereby making the pressure receiving member move via the transmitting member with the fixed fulcrum acting as a pivot.

Accordingly, the gradient of the pressure receiving member is adjusted and hence the parallelism between the upper die and the lower die is adjusted, thereby allowing a compound in a cavity formed with the molding die to be molded into a shape.

A molding method of a precision device according to the present invention uses a molding machine.
The molding machine comprises:
(a) a supporting plate;
(b) a parallelism adjustment mechanism held by the supporting plate,
   wherein the parallelism adjustment mechanism comprises a pressure receiving member, an adjusting plate with a slanting surface, a transmitting member, a fixed fulcrum and an operating member;
(c) an upper die disposed on the lower surface of the pressure receiving member;
(d) a pressure applying plate that is movable vertically;
(e) a lower die disposed on the upper surface of the pressure applying plate;
(f) a molding control means; and
(g) a fixing member for fixing the pressure receiving member on the supporting plate.
The molding method comprises the steps of:
(1) adjusting the gradient of the pressure receiving member,
   wherein the step of adjusting the gradient of the pressure receiving member comprises a step of manipulating the operating member,
   wherein, by manipulating the operating member, the adjusting plate is moved,
   wherein, as the adjusting plate is moved the pressure receiving member is slanted via the transmitting member with the fixed fulcrum acting as a pivot, and
   wherein the gradient of the pressure receiving member is adjusted and the parallelism between the upper die and the lower die is adjusted;
(2) fixing the pressure receiving member onto the supporting plate by means of the fixing member while the gradient of the pressure receiving member being adjusted by the parallelism adjustment mechanism;
(3) ascending of the pressure applying plate to have the lower die and upper die engaged with each other and molding a compound in a molding die formed of the lower die and upper die into a shape; and
(4) taking out the provisional molded product as described by moving down the lower die.
   Preferably, the molding method further comprises the steps of:
(5) measuring the dimensions of the provisional molded product;
(6) making a comparison between the measured dimensions of the provisional molded product and the desired dimensions and repeating the steps of adjusting the gradient of the pressure receiving member; and
(7) molding the compound into a shape by operating again the molding machine after repeating the steps of adjusting the gradient of the pressure receiving member.

Preferably, the adjusting plate has a slanting surface with a slanting angle and the transmitting member is moved on the slanting surface as the adjusting plate is moved, thereby causing the pressure receiving member to be slanted.

Preferably, the transmitting member comprises a true sphere and the pressure receiving member is slanted via the true sphere as the adjusting plate is moved.

Preferably, the adjusting plate comprises two adjusting plates of a first adjusting plate and a second adjusting plate, the first adjusting plate and second adjusting plate are located at positions apart from each other and the distance between the first adjusting plate and the fixed fulcrum equals to the distance between the second adjusting plate and the fixed fulcrum.

Preferably, the fixed fulcrum, first adjusting plate and second adjusting plate are located at the apexes of a triangle, respectively.

According to the structure as described in above, the parallelism of the molding die is allowed to be adjusted with a high degree of accuracy and excellent workability. As a result, a precision device with excellent dimensional accuracy can be realized.

Preferably, a precision device is an optical device,
the supporting plate has an upper plate,
the pressure receiving member has a pressure receiving plate,
the fixed fulcrum has a first true sphere,
the pressure receiving plate is fixed onto the upper plate via the first true sphere,
the adjusting plate has a first adjusting plateand a second adjusting plate,
the respective adjusting plates of the first adjusting plate and second adjusting plate have a slanting surface with a gradient,
the respective adjusting plates are located between the upper surface of the pressure receiving plate and the upper plate,
the transmitting member has a second true sphere and a third true sphere ,
the second true sphere is disposed between the slanting surface of the first adjusting plate and the upper surface of the pressure receiving plate,
the third true sphere is disposed between the slanting surface of the second adjusting plate and the upper surface of the pressure receiving plate,
the respective true spheres of the first, second and third true spheres are located at the apexes of a regular triangle,
the operating member comprises a first operating member to move the first adjusting plate and a second operating member to move the second adjusting plate,
when each respective operating member of above is manipulated, the respective adjusting plates are moved horizontally,
as each respective adjusting plate of above is moved, the pressure receiving plate slants up and down via the respective true spheres with the first true sphere serving as the fulcrum, and
the parallelism of the pressure receiving plate is adjusted.

According to the structure as described in above, the pressure receiving plate is moved vertically by the magnitude proportionate to the amount of horizontal shifting of the adjusting plate that is slanted and freely movable horizontally, thereby allowing the parallelism with respect to the reference plane to be adjusted.

Preferably, the precision device is an optical device,
the supporting plate comprises an upper plate and a side plate,
the pressure receiving member has a pressure receiving block,
the adjusting plate comprises a first adjusting plate and second adjusting plate,
each respective adjusting plate of the foregoing first and second adjusting plates has a slanting surface with a gradient,
the transmitting member has a second true sphere and a third true sphere,
each respective adjusting plate of above is disposed between the side surface of the pressure receiving block and the side plate,
the second true sphere is disposed between the slanting surface of the first adjusting plate and the side surface of the pressure receiving block,
the third true sphere is disposed between the slanting surface of the second adjusting plate and the side surface of the pressure receiving block,
the fixed fulcrum, second and third true spheres are located at the apexes of a regular triangle, respectively,
the operating member comprises a first operating member to move the first adjusting plate and a second operating member to move the second adjusting plate,
when each respective operating member of above is manipulated, the respective adjusting plates shift are moved in the vertical direction,
as each respective adjusting plate of above is moved, the pressure receiving block slants in the horizontal direction via the respective true spheres with the fixed fulcrum acting as a pivot, and
the parallelism of the pressure receiving block is adjusted.

According to the structure as described in above, the pressure receiving block is moved horizontally by the magnitude proportionate to the amount of vertical shifting of the adjusting plate that is slanted and freely movable vertically, thereby allowing the parallelism with respect to the reference plane to be adjusted.

Preferably, the parallelism adjustment mechanism further comprises a shifting amount measurement mechanism, and
the shifting amount measurement mechanism has functions to measure and confirm the amount of shifting of each respective adjusting plate of above.

Accordingly, the parallelism is allowed to be adjusted while the amount of adjustment for parallelism being measured and confirmed.

Preferably, the parallelism adjustment mechanism further comprises an automatic control means for controlling automatically the amount of shifting, and
the automatic control means detects a deviation from the reference plane of the pressure applying plate in parallelism, thereby automatically setting up the amount of shifting for the respective adjusting plates.

Accordingly, an adjustment of parallelism can be performed automatically.

Preferably, the operating member has a micrometer head, and the micrometer head comprises a first micrometer head (10) to drive the first adjusting plate and a second micrometer head (10a) to drive the second adjusting plate.

Accordingly, the shifting of the freely movable plate and the measurement of the amount of shifting are allowed to be performed readily and with a high degree of accuracy.

Preferably, the transmitting member comprises a second pair of seats, a third pair of seats, a second true sphere disposed between the second pair of sheets and a third true sphere disposed between the third pair of sheets,
the fixed fulcrum comprises a first pair of sheets and a first true sphere disposed between the first pair of sheets,
a sheet of the second pair of sheets is fixed onto the pressure receiving plate,
a sheet of the third pair of sheets is fixed onto the pressure receiving plate,
as each respective adjusting plate of above is moved, the other sheets out of the pairs of sheets slide along the slanting surface of each respective adjusting plate of the foregoing, and
as the foregoing other sheets slide, the pressure receiving plate is moved via the second and third true spheres.

Accordingly, the foregoing effects multiply.

Next, a description is given to some of the exemplary embodiments of the present invention with reference to drawings.

### First Exemplary Embodiment

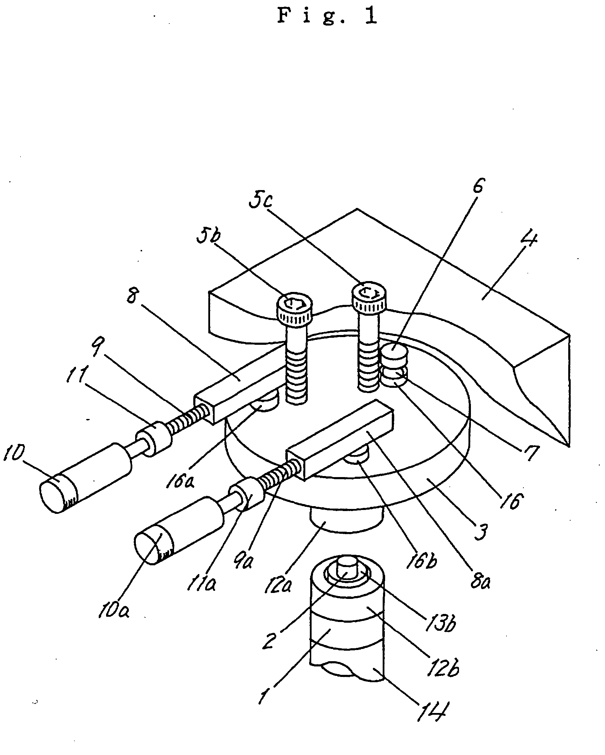

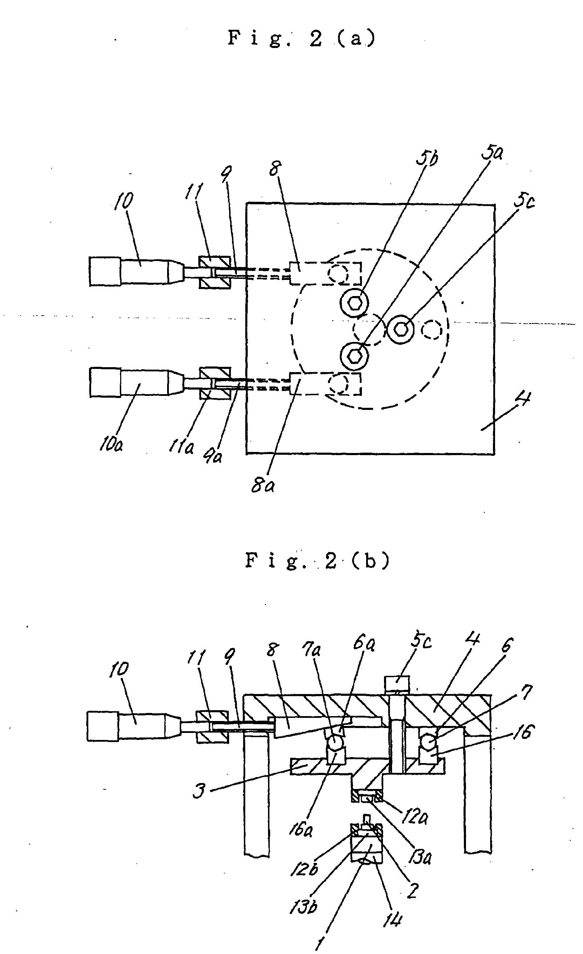

Fig. 1 is a schematic perspective sketch to show the essential part of a precision device molding machine, Fig. 2(a) is a plan view of the essential part of the molding machine and Fig. 2(b) is a cross-sectional view of the same.

In Fig. 1, Fig. 2(a) and Fig. 2(b), an optical device molding machine as the precision molding machine comprises a pressure applying plate 1, a supporting member 14, a lower die 13b, an upper plate 4 serving as a supporting plate, and upper die 13a and a parallelism adjustment mechanism. The parallelism adjustment mechanism is provided with a pressure receiving plate 3 serving as a pressure receiving member, two adjusting plates 8 and 8a, and three true spheres 7, 7a and 7b. Preferably, the parallelism adjustment mechanism comprises fixing bolts 5a, 5b and 5c as the fixing members, three pairs of seats 6, 16, 6a, 16a, 6b and 16b, micrometers 10 and 10a, joints 11 and 11a, and adjusting screws 9 and 9a. An upper die 13a and lower die 13b together form a molding die.

The pressure applying plate 1 is freely movable vertically to press the molding die. The upper surface of the pressure applying plate 1 makes a reference plane of the precision device molding machine. The lower die 13b is mounted on the upper surface of the pressure applying plate 1 by means of a lower die holder 12b. The lower die 13b is disposed on the pressure applying plate 1 and the pressure applying plate 1 is disposed on the utmost tip end of the supporting member 14. A compound 2 is put on the lower die 13b. The compound 2 is formed of a resin or glass. The pressure applying plate 1 is made movable upward.

The pressure receiving plate 3 is fastened onto the upper plate 4 by means of fixing bolts 5a, 5b and 5c. These fixing bolts 5a, 5b and 5c are located on the upper plate 4 as if the fixing bolts are situated on the apexes of a triangle, respectively. Preferably, these fixing members 5a, 5b and 5c are arranged 120 degrees apart in angle from one another, each being located on the apexes of a regular triangle, respectively. The upper die 13a is securely attached to a projected area on the lower surface of the pressure receiving plate 3 by means of an upper die holder 12a. The upper die 13a and lower die 13b are located opposite to each other. A cavity is formed in a space formed with the upper die 13a and lower die 13b.

The parallelism adjustment mechanism is disposed between the upper plate 4 and the upper die 13a. The parallelism adjustment mechanism is provided with the pressure receiving plate 3, two adjusting plates 8 and 8a, three pairs of seats 6, 16, 6a, 16a, 6b and 16b and three true spheres 7, 7a and 7b. The two adjusting plates include a first adjusting plate 8 and a second adjusting plate 8a. The three pairs of seats comprise a first pair of seats 6 and 16, a second pair of seats 6a and 16a and a third pair of seats 6b and 16b. The three spheres include a first true sphere 7, a second true sphere 7a and a third true sphere 7b.
The second pair of seats 6a and 16a, third pair of seats 6b and 16b, second true sphere 7a and third true sphere 7b form a transmitting member.
The first true sphere 7 is disposed between the first pair of seats 6 and 16. The second true sphere 7a is disposed between the second pair of seats 6a and 16a. The third true sphere 7b is disposed between the third pair of seats 6b and 16b. The respective true spheres 7, 7a and 7b are formed of super steel, ceramics or the like, and shaped like a sphere. One end of each respective member of the pairs of seats 6, 16, 6a, 16a, 6b and 16b has a cone shaped receptive surface, and the respective cone shaped receptive surfaces accept and engage with the respective true spheres 7, 7a and 7b. These pairs of seats 6, 16, 6a, 16a, 6b and 16b are formed of the same material as the true spheres 7, 7a and 7b.

As Fig. 2(b) shows, the first pair of seats 6 and 16 and the first true sphere 7 are disposed between the upper plate 4 and the pressure receiving plate 3. The first pair of seats 6 and 16 and the first true sphere function as a fixed fulcrum, respectively.

The first adjusting plate 8 and second adjusting plate 8a are disposed on the lower surface of the upper plate 4 so as to be freely movable horizontally. The respective first adjusting plate 8 and second adjusting plate 8a have an upper surface with a flat plane and a lower surface with a slanting plane. The upper surface of the first adjusting plate 8 is brought into intimate contact with the lower surface of the upper plate 4 so as to be allowed to slide thereon. The slanting surface of the first adjusting plate 8 is brought into intimate contact with one seat 6a out of the second pair of seats 6a and 16a so as to be allowed to slide thereon. One seat 16a of the second pair of seats 6a and 16a is fixed onto the upper surface of the pressure receiving plate 3. Thus, the pressure receiving plate 3 is allowed to be interlocked in movement with the first adjusting plate 8 via the second pair of seats 6a and 16a and the second true sphere 7a. Similarly, the upper surface of the second adjusting plate 8a is brought into intimate contact with the lower surface of the upper plate 4 so as to be allowed to slide thereon. The slanting surface of the second adjusting plate 8a is brought into intimate contact with one seat 6b out of the third pair of seats 6b and 16b so as to be allowed to slide thereon. One seat 16b of the third pair of seats 6b and 16b is fixed onto the upper surface of the pressure receiving plate 3. Thus, the pressure receiving plate 3 is allowed to be interlocked in movement with the second adjusting plate 8a via the third pair of seats 6b and 16b and the third true sphere 7b.

The first true sphere 7, second true sphere 7a and third true sphere 7b are located at the apexes of a triangle, respectively. Preferably, these true spheres 7, 7a and 7b are arranged 120 degrees apart in angle from one another, each being located on the apexes of a regular triangle, respectively. Preferably, the distance between the first true sphere 7 and the second true sphere 7a equals to the distance between the first true sphere 7 and the third true sphere 7b. Preferably, the first fixing bolt 5c and first true sphere 7 are located on the same axis line that passes the center of the upper die 13b. The second fixing bolt 5a and second true sphere 7a are located on the same axis line that passes the center of the upper die 13b. The third fixing bolt 5b and third true sphere 7b are located on the same axis line that passes the center of the upper die 13b.

One end of the first adjusting screw 9 hits on the side surface of the first adjusting plate 8. One end of the second adjusting screw 9a hits on the side surface of the second adjusting plate 8a. These adjusting screws 9 and 9a are rotated, thereby making the adjusting plates 8 and 8a move horizontally. The first micrometer head 10 is linked with the other end of the first adjusting screw 9 by means of the first joint 11. The second micrometer head 10a is linked with the other end of the second adjusting screw 9a by means of the second joint 11a. These micrometer heads 10 and 10a drive the adjusting screws 9 and 9a to shift in position, determine the amount of shifting and, further, measure and confirm the amount of shifting.

Upon manipulating the first micrometer head 10, the first adjusting screw 9 rotates and, as the first adjusting screw rotates, the first adjusting plate 8 is moved horizontally. With the movement of the first adjusting plate 8, one seat 6a of the first pair of seats 6a and 16a slides on the slanting surface of the first adjusting plate 8, thereby causing the pressure receiving plate 3 to slant via the second true sphere 7a and seat 16a.

Similarly, upon manipulating the second micrometer head 10a, the pressure receiving plate 3 slants via the third true sphere 7b and second pair of seats 6b and 16b. Thus, the molding machine as described in above makes it possible for such a fine adjustment as close to one micron to be achieved.

Next, a description is given to the steps of molding an optical device by the use of a precision device molding machine structured as described in above and adjusting the parallelism of the optical device.

First, the optical device is provisionally molded. More specifically, a compound 2 is placed at a predetermined position of the lower die 13b and then the pressure applying plate 1 is lifted, thereby having the lower die 13b and upper die 13a put together to engage each other. Under this condition, the compound 2 is heated and pressed. Thereafter, when the compound 2 is formed of a thermoplastic resin, the compound 2 is cooled and the pressure applying plate 1 is moved down. Then, the molded optical device is taken out of the molding die. When the compound 2 is formed of a thermosetting resin, the pressure applying plate 1 is moved down after the compound 2 is hardened. After that, the molded optical device is taken out of the molding die. Thus, the optical device is provisionally molded.

Then, the provisional molded optical device is checked for parallelism by having the parallelism of the optical device measured at a plurality of points around the perimeter thereof, for example, or alternatively, by having the interference stripes measured by the use of an optical measurement instrument. Thus, the parallelism of the entire provisional molded product is checked. Further, based on the measurement result of the provisional molded product, a proper amount of compensating adjustment of the parallelism adjustment mechanism is determined in order for the necessary parallelism to be established.

In order to correct the parallelism of the provisional molded product thus obtained to have a predetermined degree of accuracy, the parallelism adjustment mechanism of the molding machine is adjusted. More specifically, three bolts of the second fixing bolt 5a, third fixing bolt 5b and first fixing bolt 5c are loosened and the first micrometer head 10 and second micrometer head 10a are rotated, thereby making the upper die 13a slant to a desired angle via the pressure receiving plate 3, second true sphere 7a, third true sphere 7b, second pair of seats 6a and 16a and third pair of seats 6b and 16b. Thus, the angle of the upper die 13a is adjusted so as to establish a predetermined degree of parallelism.

Preferably, the first adjusting plate 8 and second adjusting plate 8a are slightly slanted. When the adjusting plates 8 and 8a are slightly slanted, the magnitude of slanting of the pressure receiving plate 3 is made small in comparison with the distance of shifting in position of the adjusting plates. In other words, by making the slanting of the adjusting plates smaller, the resolving power of adjustment in the slanting angle against the shifting in position of the respective adjusting plates is allowed to increase. Further, it is preferred that the first adjusting screw 9 and second adjusting screw 9a have a small screw thread pitch, respectively. When the pitch of the adjusting screw is small, the distance of shifting in position of the adjusting plate for the number of rotation of the screw becomes small, resulting in an increase of the resolving power of adjustment in the slanting angle of the pressure receiving plate, or alternatively, by changing the radius of curvature of the true sphere and the radius of curvature of the seat, the resolving power of adjustment in the slanting angle of the pressure receiving plate is allowed to be adjusted. Alternatively, the moving of the adjusting screws 9 and 9a or the adjusting plates 8 and 8a is initiated and the amount of moving is established or confirmed by the use of the micrometer heads 10 and 10a. In other words, the slanting of the pressure receiving plate 3 is allowed to be fine tuned according to the slanting angle made by the slanting surface of each respective adjusting plate, pitch of each respective adjusting screw, radius of curvature of each respective true sphere, micrometer head and the like, thereby allowing a fine adjustment of 1 µm or less in gradient to be made, for example. Thus, the adjusting plates 8 and 8a are adjusted by a required amount of shifting in position and the positions thereof are fixed there. Then, the three bolts of the second fixing bolt 5a, third fixing bolt 5b and first fixing bolt 5c are fastened again to finish the adjustment of the upper die 13a in parallelism. By the use of a molding machine prepared as described in above, a compound is molded in the same way as described in above. By repeating these steps as needs require, a precision device with a required degree of accuracy in parallelism is allowed to be molded.

Next, a description is given to molding of an optical device as a specific example of the precision device. For example, the three true spheres of the first true sphere 7, second true sphere 7a and third true sphere 7b are arranged on a concentric circle of 90 mm in diameter to occupy the three apexes of a regular triangle, respectively. When the first adjusting plate 8 and second adjusting plate 8a are moved by about 1 mm horizontally, respectively, the respective adjusting plates 8 and 8a are moved by 0.05 mm vertically. In other words, the gradient of each respective adjusting plate is set up so as to have the amount of shifting in position changed vertically by one twentieth of the amount of horizontal shifting in position. When a disc shaped optical device of 3.9 mm in outer diameter is molded and adjusted to have a predetermined degree of accuracy in parallelism, in order for the optical device to be slanted by 1 µm to the right when looked from the operator side, the second adjusting plate 8a located at the right side is moved by 2 mm toward the back thereof and further the first adjusting plate 8 located at the left side is moved by 2 mm toward the front thereof, thereby achieving a predetermined gradient. As a result, an optical device with a required degree of accuracy in parallelism is allowed to be obtained.

Preferably, the precision device molding machine of above further comprises a control mechanism, which detects a deviation of the molding machine in parallelism from the reference plane and allows the required amount of shifting in position of the adjusting plate to be determined automatically. Also, the foregoing precision device molding machine is equipped with an automatic control mechanism for controlling automatically molding operation processes, a drive mechanism for adjusting plates, a measurement mechanism of the amount of shifting in position of adjusting plates and the like. Accordingly, each respective processing step of the precision device molding machine is automated with a resulting contribution to further enhancement of accuracy in the configuration of the precision device to be molded and also to molding of the precision device having a high degree of accuracy with stability. When the precision device is an optical device, an extremely excellent effect can be gained.

### Second Exemplary Embodiment

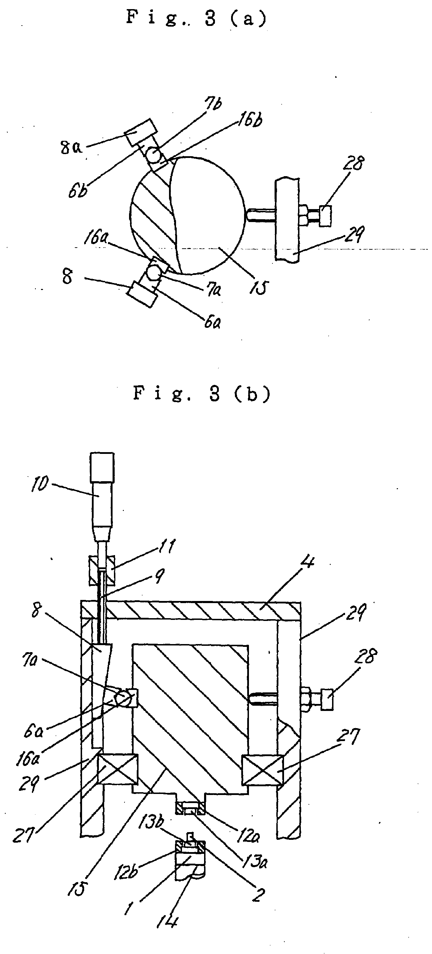

Fig. 3(a) is a partially cut out plan view of the essential part of a precision device molding machine in a second exemplary embodiment of the present invention and Fig. 3(b) is a cross-sectional view of the same.

In Fig. 3(a) and Fig. 3(b), the precision device molding machine comprises a pressure applying plate 1, a supporting member 14, a lower die 13b, an upper plate 4 and a side plate 29 acting as a supporting plate, respectively, an upper die 13a and a parallelism adjustment mechanism. The parallelism adjustment mechanism comprises a pressure receiving block 15 acting as a pressure receiving member, true spheres 7a and 7b, and adjusting plates 8 and 8a. The pressure receiving block 15 is tall and shaped like a cylindrical column, for example. Preferably, the parallelism adjustment mechanism comprises seats 6a and 6b, a pressing bolt 28 acting as a fixed fulcrum, a bearing 27, a micrometer head 10, a joint 11 and an adjusting screw 9. The side plate 29 is held by the upper plate 4. The pressure receiving block 15 is shaped like a cylindrical column and supported by the bearing 27, and also is surrounded by the side plate 29. The pressing bolt 28 is held by the side plate 29 and pressed against the side surface of the pressure receiving block 15. The upper die 13a is disposed on the lower surface of the pressure receiving block 15 by means of an upper die holder 12a. The lower die 13b is disposed at the position opposite to the upper die 13a. The lower die 13b is disposed on the upper surface of the pressure applying plate 1 by means of a lower die holder 12b. The upper surface of the pressure applying plate 1 serves as the reference plane for an adjustment of parallelism.

The adjusting plate is comprised of a first adjusting plate 8 and a second adjusting plate 8a. The first adjusting plate 8 and second adjusting plate 8a have, respectively, a slanting surface with a gradient and a contact surface conforming to the configuration of the inner surface of the side plate 29. These contact surfaces are made to be brought into contact with the inner surface of the side plate 29 when the first adjusting plate 8 and second adjusting plate 8a are put in place so as to be freely movable, respectively.

The true sphere is comprised of a first true sphere 7a and a second true sphere 7b. A first pair of seats 6a and 16a are disposed on the slanting surface of the first adjusting plate 8 and on the surface of the pressure receiving block 15. One of the first pair of seats 6a and 16a is fixed on the pressure receiving block 15 and the other one is disposed on the slanting surface of the first adjusting plate 8 so as to be freely movable. The first true sphere 7a is located between the first pair of seats 6a and 16a. A second pair of seats 6b and 16b are disposed on the slanting surface of the second adjusting plate 8a and on the surface of the pressure receiving block 15. One of the second pair of seats 6b and 16b is fixed on the pressure receiving block 15 and the other one is disposed on the slanting surface of the second adjusting plate 8a so as to be freely movable. The respective true spheres 7a and 7b are formed of super steel or ceramics and shaped like a sphere. One end of each respective seat of the pairs of seats 6a, 16a, 6b and 16b has a cone shaped receptive surface, and the respective cone shaped receptive surfaces accept and engage with the respective true spheres 7a and 7b. These pairs of seats 6, 16, 6a, 16a, 6b and 16b are formed of the same material as the true spheres 7a and 7b. The second true sphere 7b is located between the second pair of seats 6b and 16b. The distance between the pressing bolt 28 and the first true sphere 7a measured along the perimeter on the side surface of the pressure receiving block 15 is the same as the distance between the pressing bolt 28 and the second true sphere 7b. Preferably, the pressing bolt 28, first true sphere 7a and second true sphere 7b are equally spaced from one another along the perimeter on the side surface of the pressure receiving block 15.
When the parallelism of the pressure receiving block 15 is adjusted, these pairs of seats 6a, 16a, 6b and 16b and true spheres 7a and 7b serve the function of a transmitting member, respectively. In addition, the true spheres 7a and 7b serve the function of a fulcrum, respectively.

Three fixing bolts acting as a fixing member, which are not shown in the drawing, are disposed on the upper plate 4 or on the side plate 29. After the parallelism of the pressure receiving block 15 is adjusted, these three fixing bolts ultimately fix the pressure receiving block 15 so that the state of adjusted parallelism is maintained.

One end of the first adjusting screw 9 is brought into hitting against the side surface of the first adjusting plate 8. Similarly, one end of the second adjusting screw 9a is brought into hitting against the side surface of the second adjusting plate 8a. When these adjusting screws 9 and 9a are rotated, the adjusting plates 8 and 8a are moved up and down. The first micrometer head 10 is linked with the other end of the first adjusting screw 9 by means of a first joint 11. The second micrometer head 10a is linked with the other end of the second adjusting screw 9a by means of a second joint 11a. These micrometer heads 10 and 10a drive the adjusting screws 9 and 9a to shift in position and determine the amount of shifting thereof, and further measure and confirm the amount of shifting, thereby allowing the molding machine thus structured to make such a fine adjustment as close to 1 micron.

By manipulating the micrometer head 10, the adjusting plates 8 and 8a are moved up and down and the seats 6a and 6b are moved by sliding on the respective slanting surfaces formed on the adjusting plates 8 and 8a, thereby having the gradient of the pressure receiving block 15 adjusted. As a result,
the horizontality of the pressure receiving block 15 against the reference plane is adjusted.

Next, a description is given to the steps of molding an optical device by the use of a precision device molding machine structured as described in above and adjusting the parallelism of the optical device.

First, the optical device is provisionally molded. More specifically, a compound 2 is placed at a predetermined position of the lower die 13b and then the pressure applying plate 1 is lifted, thereby having the lower die 13b put together with the upper die 13a to engage each other. Under this condition, the compound 2 is heated and pressed. Thereafter, when the compound 2 is formed of a thermoplastic resin, the compound 2 is cooled and the pressure applying plate 1 is moved down. Then, the molded optical device is taken out of the molding die. When the compound 2 is formed of a thermosetting resin, the pressure applying plate 1 is moved down after the compound 2 is hardened. After that, the molded optical device is taken out of the molding die. Thus, the optical device is provisionally molded.

Then, the provisional molded optical device is checked for parallelism by having the parallelism of the optical device measured at a plurality of points around the perimeter thereof, for example, or alternatively, by having the interference stripes measured by the use of an optical measurement instrument. Thus, the parallelism of the entire provisional molded product is checked. Further, based on the measurement result of the provisional molded product, a proper amount of compensating adjustment of the parallelism adjustment mechanism is determined in order for the necessary parallelism to be established.

In order to correct the parallelism of the provisional molded product thus obtained to have a predetermined degree of accuracy, the parallelism adjustment mechanism of the molding machine is adjusted. More specifically, three bolts not shown in the drawing are loosened and the first micrometer head 10 and second micrometer head 10a are rotated, thereby making the upper die 13a slant to a desired angle via the pressure receiving block 15, true spheres 7a and 7b, pairs of seats 6a, 16a, 6b and 16b. Thus, the angle of the upper die 13a is adjusted to establish a predetermined degree of accuracy in parallelism.

Preferably, the first adjusting plate 8 and second adjusting plate 8a are slightly slanted. By making the gradient of the adjusting plates smaller, the resolving power of adjustment in the slanting angle against the shifting in position of the respective adjusting plates is allowed to increase. Further, it is preferred that the first adjusting screw 9 and second adjusting screw 9a have a small screw thread pitch, respectively. Alternatively, the moving of the adjusting plates 8 and 8a is initiated and the amount of moving is established or confirmed by the use of the micrometer heads 10 and 10a, thereby making it possible to make a fine adjustment of 1 µm or less, for example. Thus, the adjusting plates 8 and 8a are adjusted by a required amount of shifting in position and the positions thereof are fixed there. Then, the three bolts are fastened again to finish the adjustment of parallelism of the upper die 13a. By the use of a molding machine prepared as described in above, a compound is molded in the same way as described before. By repeating these steps as needs require, a precision device with a required degree of accuracy in parallelism is allowed to be molded.

### Third Exemplary Embodiment

Next, a description is given to a method for molding a precision device in a third exemplary embodiment of the present invention. In the present exemplary embodiment, the molding machine as described in the previous exemplary embodiments is used. The molding machine comprises:
(a) supporting plates (4, 29);
(b) a parallelism adjustment mechanism (3, 7, 8, 8a, 15) held by the supporting plates,
   wherein the parallelism adjustment mechanism comprises a pressure receiving member, an adjusting plate with a slanting surface, a transmitting member, a fixed fulcrum and an operating member;
(c) an upper die disposed on the lower surface of the pressure receiving member (13a);
(d) a pressure applying plate (1) that is movable up and down;
(e) a lower die (13b) disposed on the upper surface of the pressure applying plate;
(f) a molding control means; and
(g) a fixing member to fix the pressure receiving member onto the supporting plate.

The molding method comprises the steps of:
(1) adjusting the gradient of the pressure receiving member,
   wherein the step of adjusting the gradient of the pressure receiving member comprises the step of manipulating the operating member, thereby having the adjusting plate moved, and
   wherein, as the adjusting plate is moved, the pressure receiving member is slanted via the transmitting member with the fixed fulcrum acting as a pivot and the slanting of the pressure receiving member is adjusted, thereby leading to an adjustment of the parallelism between the upper die and the lower die;
(2) fixing the pressure receiving member onto the supporting plate by means of the fixing member under the condition where the gradient of the pressure receiving member is adjusted by the parallelism adjustment mechanism;
(3) having the pressure applying plate lifted to make the lower die and upper die engage each other, and
   molding a compound in a molding die formed of the lower die and upper die; and
(4) taking out a provisional molded product as described by having the lower die moved down.
   Preferably, the molding method further comprises the steps of:
(5) measuring the dimensions of the provisional molded product;
(6) repeating the steps of making an adjustment of the gradient of the pressure receiving member after making a comparison between the dimensions measured on the provisional molded product and the desired dimensions thereof; and
(7) operating again the molding machine to put out a molded product after repeating the steps of making an adjustment of the gradient of the pressure receiving member.

Preferably, the transmitting member is disposed between the pressure receiving member and the adjusting plate, the fixed fulcrum fixes securely one point of the pressure receiving member and the supporting plate and the adjusting plate is moved by manipulating the operating member in the step of making an adjustment of the gradient of the pressure receiving member, thereby causing the pressure receiving member to move via the transmitting member with the fixed fulcrum acting as a pivot. As a result, the gradient of the pressure receiving member is adjusted to make an adjustment of the parallelism between the upper die and the lower die.

Preferably, the adjusting plate has a slanting surface with a slanting angle and the transmitting member moves on the slanting surface as the adjusting plate moves in the step of making an adjustment of the gradient of the pressure receiving member, thereby causing the pressure receiving member to slant.

Preferably, the adjusting plate has a slanting surface with a slanting angle, the transmitting member has a pair of seats and a true sphere disposed between the pair of seats, one seat of the pair of seats is fixed onto the pressure receiving member and the other seat of the pair of seats slides along the slanting surface as the adjusting plate is moved in the step of making an adjustment of the gradient of the pressure receiving member, thereby causing the pressure receiving member to move via the true sphere and the foregoing one seat.

Preferably, the adjusting plate comprises two adjusting plates of a first adjusting plate and a second adjusting plate, the first adjusting plate and second adjusting plate are located apart from each other and the distance between the first adjusting plate and the fixed fulcrum is the same as the distance between the second adjusting plate and the fixed fulcrum.

Preferably, the molded product is an optical device.

Preferably, the operating member comprises a micrometer and a screw linked with the micrometer, the adjusting plate has a slanting surface with a slanting angle and, in the step of making an adjustment of the gradient of the pressure receiving member, the screw is rotated by manipulating the micrometer to cause the adjusting plate to shift in position, thereby causing the pressure receiving member to slant via the transmitting member.

Next, a description is given to the steps of molding an optical device by the use of a precision device molding machine structured as described in above and adjusting the parallelism of the optical device. The molding method is described in the foregoing first and second exemplary embodiments.

First, the optical device is provisionally molded. More specifically, the compound 2 is placed at a predetermined position of the lower die 13b and then the pressure applying plate 1 is lifted, thereby having the lower die 13b and upper die 13a put together to engage each other.
Under this condition, the compound 2 is heated and pressed. Thereafter, when the compound 2 is formed of a thermoplastic resin, the compound 2 is cooled and the pressure applying plate 1 is moved down. Then, the molded optical device is taken out of the molding die. When the compound 2 is formed of a thermosetting resin, the pressure applying plate 1 is moved down after the compound 2 is hardened. After that, the molded optical device is taken out of the molding die. Thus, the optical device is provisionally molded.

Then, the provisional molded optical device is checked for parallelism by having the parallelism of the optical device measured at a plurality of points around the perimeter thereof, for example, or alternatively, by having the interference stripes measured by the use of an optical measurement instrument. Thus, the parallelism of the entire provisional molded product is checked. Further, based on the measurement result of the provisional molded product, a proper amount of compensating adjustment of the parallelism adjustment mechanism is determined in order for the necessary parallelism to be established.

In order to correct the parallelism of the provisional molded product thus obtained to have a predetermined degree of accuracy, the parallelism adjustment mechanism of the molding machine is adjusted. More specifically, three bolts of the second fixing bolt 5a, third fixing bolt 5b and first fixing bolt 5c are loosened and the first micrometer head 10 and second micrometer head 10a are rotated, thereby making the upper die 13a slant to a desired angle via the pressure receiving member such as the pressure receiving plate 3 or pressure receiving block 15, second true sphere 7a and third true sphere 7b, pair of seats 6a and 16a and pair of seats 6b and 16b. Thus, the angle of the upper die 13a is adjusted to establish a predetermined degree of accuracy in parallelism.

Thereafter, a product to be molded is molded again by the use of the molding machine adjusted as described in above.

Further, as needs require, the foregoing steps are repeated. Thus, a molded product with a desired degree of accuracy in dimensions is produced. According to this molding method, the pressure receiving member is adjusted to close to 1 µm at minimum in gradient. As a result, the dimensional error of the molded product is allowed to be adjusted to close to 1 µm.

Thus, according to the precision device molding machine of the present invention, the gradient of the upper die is allowed to be controlled in order to obtain a precision device with a required degree of accuracy in parallelism without being affected by the accuracy and thermal distortion of the materials constituting the molding machine. As a result, a precision device with excellent dimensional accuracy is obtained. In addition, the molding steps involved can be readily automated. Moreover, by having the magnitude of gradient of the adjusting plate and the radius of curvature of the true sphere varied, the resolving power of adjustment can be established freely.

### Key to Reference Alphanumeric Characters

- 1: Pressure Applying Plate
- 2: Compound
- 3: Pressure Receiving Plate, Pressure Receiving Member
- 4: Upper Plate
- 5a, 5b & 5c: Fixing Bolt, Fixing Means
- 6 & 16: First Pair of Seats
- 6a & 16a: Second Pair of Seats
- 6b & 16b: Third Pair of Seats
- 7: First True Sphere
- 7a: Second True Sphere
- 7b: Third True Sphere
- 8: First Adjusting Plate
- 8a: Second Adjusting Plate
- 9: First Adjusting Screw
- 9a: Second Adjusting Screw
- 10: First Micrometer Head
- 10a: Second Micrometer Head
- 11: First Joint
- 11a: Second Joint
- 12a: Upper Die Holder
- 12b: Lower Die Holder
- 13a: Upper Die
- 13b: Lower Die
- 14: Supporting Member
- 15: Pressure Receiving Block, Pressure Receiving Member
- 19: Pressure Applying Block
- 20: Pressure Receiving Block
- 21: Plate
- 22: Upper Shaft
- 23: Lower Shaft
- 27: Bearing
- 28: Pressing Bolt
- 29: Side Plate

## Claims

1. A precision device molding machine comprising:
(a) a supporting plate (4, 29);
(b) a parallelism adjustment mechanism held by said supporting plate (3, 7, 8, 8a, 15);
(c) a pressure applying plate (1) that is movable up and down;
(d) a lower die (13b) disposed on an upper surface of said pressure applying plate;
(e) a molding control means; and
(f) an upper die (13a) disposed on said parallelism adjustment mechanism,
wherein, when said pressure applying plate is moved upward, said upper die and lower die are engaged with each other to form a molding die,
wherein said parallelism adjustment mechanism comprises a pressure receiving member (3, 15), an adjusting plate (8, 8a), a transmitting member (7a, 7b), a fixed fulcrum (7) and an operating member (10),
wherein said transmitting member is disposed between said pressure receiving member and said adjusting plate,
wherein said fixed fulcrum fixes securely one point of said pressure receiving member and said supporting plate,
wherein said adjusting plate is moved by having said operating member manipulated, and
wherein said pressure receiving member is slanted with said fixed fulcrum acting as a pivot via said transmitting member as said adjusting plate is being moved,
thereby a gradient of said pressure receiving member is adjusted, parallelism between said upper die and said lower die is adjusted, and a compound in a cavity formed in said molding die is molded.

2. The precision device molding machine according to Claim 1,
wherein said adjusting plate has a slanting surface with a slanting angle,
wherein said transmitting member is moved on said slanting surface when said adjusting plate is moved, and
wherein said pressure receiving member is slanted as said transmitting member is being moved.

3. The precision device molding machine according to Claim 2,
wherein said transmitting member comprises a pair of seats and a true sphere disposed between said pair of seats,
wherein one seat of said pair of seats is fixed onto said pressure receiving member,
wherein another seat of said pair of seats slides along said slanting surface of said adjusting plate as said adjusting plate is being moved, and
wherein said pressure receiving member is moved via said true sphere and said one seat as said another seat is sliding.

4. The precision device molding machine according to Claim 1,
wherein said adjusting plate comprises two adjusting plates of a first adjusting plate and a second adjusting plate,
wherein said first adjusting plate and second adjusting plate are located apart from each other, and
wherein a distance between said first adjusting plate and said fixed fulcrum equals to a distance between said second adjusting plate and said fixed fulcrum.

5. The precision device molding machine according to Claim 1,
wherein said adjusting plate comprises two adjusting plates of a first adjusting plate and a second adjusting plate, and
wherein said fixed fulcrum, first adjusting plate and second adjusting plate are located on the apexes of a regular triangle, respectively.

6. The precision device molding machine according to Claim 1, further comprising a fixing member to fix securely said parallelism adjustment mechanism onto said supporting member,
wherein said fixing member has a function of fixing said parallelism adjustment mechanism onto said supporting member after said parallelism adjustment mechanism is adjusted in parallelism thereof.

7. The precision device molding machine according to Claim 1,
wherein said upper die and lower die are adjusted to an error of 1 µm minimum in parallelism therebetween.

8. The precision device molding machine according to Claim 1,
wherein said precision device is an optical device.

9. The precision device molding machine according to Claim 1,
wherein said operating member comprises a micrometer and a screw linked with said micrometer,
wherein said adjusting plate has a slanting surface with a slanting angle,
wherein said screw is rotated by manipulating said micrometer,
wherein said adjusting plate is moved as said screw is being rotated, and
wherein said pressure receiving member is slanted via said transmitting member as said adjusting plate is being moved.

10. The precision device molding machine according to Claim 1,
wherein said precision device is an optical device,
wherein said supporting plate has an upper plate (4),
wherein said pressure receiving member has a pressure receiving plate (3),
wherein said fixed fulcrum has a first true sphere (7),
wherein said pressure receiving plate is fixed onto said upper plate via said first true sphere,
wherein said adjusting plate comprises a first adjusting plate (8) and a second adjusting plate (8a),
wherein said first adjusting plate and second adjusting plate have a slanting surface with a gradient, respectively,
wherein said each respective adjusting plate is located between an upper surface of said pressure receiving plate and said upper plate,
wherein said transmitting member comprises a second true sphere (7a) and a third true sphere (7b),
wherein said second true sphere is disposed between a slanting surface of said first adjusting plate and an upper surface of said pressure receiving plate,
wherein said third true sphere is disposed between a slanting surface of said second adjusting plate and an upper surface of said pressure receiving plate,
wherein said first true sphere, second true sphere and third true sphere are located on the apexes of a regular triangle, respectively,
wherein said operating member comprises a first operating member to move said first adjusting plate and a second operating member to move said second adjusting plate,
wherein, when said respective operating members are manipulated, said respective adjusting plates are moved horizontally, and
wherein, as said each respective adjusting plate is being moved, said pressure receiving plate is slanted up and down via said respective true spheres with said first true sphere acting as a pivot, thereby making an adjustment of parallelism of said pressure receiving plate.

11. The precision device molding machine according to Claim 10,
wherein said parallelism mechanism further comprises a shifting amount measurement mechanism, and
wherein said shifting amount measurement mechanism has a function of measuring and confirming an amount of shifting in position of said respective adjusting plates.

12. The precision device molding machine according to Claim 10,
wherein said parallelism adjustment mechanism further comprises an automatic control means for controlling a shifting amount automatically, and
wherein said automatic control means detects a deviation of said pressure applying plate from a reference plane in parallelism and determines a shifting amount for said each respective adjusting plate automatically.

13. The precision device molding machine according to Claim 10,
wherein said operating member has a micrometer head, and
wherein said micrometer head comprises a first micrometer head (10) to drive said first adjusting plate and a second micrometer head (10a) to drive said second adjusting plate.

14. The precision device molding machine according to Claim 10,
wherein said transmitting member comprises a second pair of seats (6a, 16a), a third pair of seats (6b, 16b), a second true sphere (7a) disposed between said second pair of seats and a third true sphere (7b) disposed between said third pair of seats,
wherein said fixed fulcrum comprises a first pair of seats (6, 16) and a true sphere (7) disposed between said first pair of seats,
wherein one seat (16a) of said second pair of seats is fixed onto said pressure receiving plate,
wherein one seat (16b) of said third pair of seats is fixed onto said pressure receiving plate,
wherein, as said each respective adjusting plate is being moved, other seats (6a, 6b) of said pairs of seats slide along said slanting surface of said respective adjusting plates, and
wherein, as said other seats are sliding, said pressure receiving plate is via said second true sphere and third true sphere.

15. The precision device molding machine according to Claim 1,
wherein said precision device is an optical device,
wherein said supporting plate comprises an upper plate (4) and a side plate (29),
wherein said pressure receiving member has a pressure receiving block (15),
wherein said adjusting plate comprises a first adjusting plate (8) and a second adjusting plate (8a),
wherein said each respective adjusting plate of said first adjusting plate and second adjusting plate has a slanting surface with a gradient,
wherein said transmitting member comprises a second true sphere (7a) and a third true sphere (7b),
wherein said each respective adjusting plate is located between a side surface of said pressure receiving block and said side plate,
wherein said second true sphere is disposed between a slanting surface of said first adjusting plate and a side surface of said pressure receiving block,
wherein said third true sphere is disposed between a slanting surface of said second adjusting plate and a side surface of said pressure receiving block,
wherein said fixed fulcrum, second true sphere and third true sphere are located on the apexes of a regular triangle, respectively,
wherein said operating member comprises a first operating member to move said first adjusting plate and a second operating member to move said second adjusting plate,
wherein, when said respective operating members are manipulated, said respective adjusting plates are moved vertically, and
wherein, as said each respective adjusting plate is being moved, said pressure receiving block is slanted in a horizontal direction via said respective true spheres, thereby allowing said pressure receiving block to be adjusted in parallelism.

16. The precision device molding machine according to Claim 15,
wherein said parallelism adjustment mechanism further comprises a shifting amount measurement mechanism, and
wherein said shifting amount measurement mechanism has a function of measuring a shifting amount of said each respective adjusting plate and then making a confirmation thereof.

17. The precision device molding machine according to Claim 15,
wherein said parallelism adjustment mechanism further comprises an automatic control means to control a shifting amount, and
wherein said automatic control means detects a deviation of said pressure applying plate from a reference plane in parallelism and determines a shifting amount for said each respective adjusting plate automatically.

18. The precision device molding machine according to Claim 15,
wherein said operating member has a micrometer head, and
wherein said micrometer head comprises a first micrometer head (10) to drive said first adjusting plate and a second micrometer head (10a) to drive said second adjusting plate.

19. The precision device molding machine according to Claim 15,
wherein said transmitting member comprises a second pair of seats (6a, 16a), a third pair of seats (6b, 16b), a second true sphere (7a) disposed between said second pair of seats and a third true sphere (7b) disposed between said third pair of seats,
wherein one seat (16a) of said second pair of seats is fixed onto said pressure receiving block,
wherein one seat (16b) of said third pair of seats is fixed onto said pressure receiving block,
wherein, as said each respective adjusting plate is being moved, other seats (6a, 6b) of said pairs of seats slide along said slanting surface of said each respective adjusting plate, and
wherein, as said other seats are sliding, said pressure receiving plate slants via said second true sphere and third true sphere.

20. The precision device molding machine according to Claim 15,
wherein said parallelism adjustment mechanism further comprises a bearing (27), and
wherein said pressure receiving block is supported by said bearing.

21. A method for molding a precision device by using a molding machine, said molding machine comprising:
(a) a supporting plate (4, 29);
(b) a parallelism adjustment mechanism held by said supporting plate (3, 7, 8, 8a, 15),
wherein said parallelism adjustment mechanism comprises a pressure receiving member, an adjusting plate with a slanting surface, a transmitting member, a fixed fulcrum and an operating member;
(c) an upper die (13a) disposed on a lower surface of said pressure receiving plate;
(d) a pressure applying plate that is movable up and down;
(e) a lower die (13b) disposed on an upper surface of said pressure applying plate;
(f) a molding control means; and
(g) a fixing member to fix said pressure receiving member onto said supporting plate,
said molding method comprising the steps of:
(1) adjusting a gradient of a pressure receiving member,
wherein said step of adjusting a gradient of said pressure receiving member comprises a step of manipulating said operating member, thereby having said adjusting plate moved, and
wherein, as said adjusting plate is being moved, said pressure receiving member is slanted via said transmitting member with said fixed fulcrum acting as a pivot, a gradient of said pressure receiving member is adjusted and an adjustment of parallelism between said upper die and said lower die is made;
(2) fixing said pressure receiving member onto said supporting plate by means of said fixing member under a condition where a gradient of said pressure receiving member is adjusted by said parallelism adjustment mechanism;
(3) having said pressure applying plate lifted to make said lower die and upper die engage with each other and molding a compound in a molding die formed with said lower die and upper die; and
(4) taking out a provisional molded product as described by having said lower die moved down.

22. The molding method according to Claim 21, further comprising the step of:
(5) measuring dimensions of said provisional molded product;
(6) repeating steps of making an adjustment of gradient of said pressure receiving member after making a comparison between dimensions measured on said provisional molded product and desired dimensions thereof; and
(7) operating again said molding machine to put out a molded product after repeating steps of making an adjustment of gradient of said pressure receiving member.

23. The molding method according to Claim 21,
wherein said transmitting member is disposed between said pressure receiving member and said adjusting plate,
wherein said fixed fulcrum fixes securely one point of said pressure receiving member and said supporting plate, and
wherein said adjusting plate is moved, by said operating member is manipulated in a step of making an adjustment of gradient of said pressure receiving member,
wherein said pressure receiving member is moved via said transmitting member with said fixed fulcrum acting as a pivot,
thereby a gradient of said pressure receiving member to be adjusted and parallelism between said upper die and said lower die to be adjusted.

24. The molding method according to Claim 21,
wherein said adjusting plate has a slanting surface with a slanting angle, and
wherein said transmitting member is moved on said slanting surface as said adjusting plate is being moved in said step of adjusting a gradient of said pressure receiving member, thereby causing said pressure receiving member to be slanted.

25. The molding method according to Claim 21,
wherein said adjusting plate has a slanting surface with a slanting angle,
wherein said transmitting member comprises a pair of seats and a true sphere disposed between said pair of seats,
wherein one seat out of said pair of seats is fixed onto said pressure receiving member,
wherein, as said adjusting plate is being moved, another seat out of said pair of seats slides along said slanting surface of said adjusting plate in said step of adjusting a gradient of said pressure receiving member,
thereby causing said pressure receiving member to move via said true sphere and said one seat.

26. The molding method according to Claim 21,
wherein said adjusting plate comprises two adjusting plates of a first adjusting plate and a second adjusting plate,
wherein said first adjusting plate and second adjusting plate are located apart from each other, and
wherein a distance between said first adjusting plate and said fixed fulcrum equals to a distance between said second adjusting plate and said fixed fulcrum.

27. The molding method according to Claim 21,
wherein said molded product is an optical device.

28. The molding method according to Claim 21,
wherein said operating member comprises a micrometer and a screw linked with said micrometer,
wherein said adjusting plate has a slanting surface with a slanting angle, and
wherein said screw is rotated by having said micrometer manipulated in said step of adjusting a gradient of said pressure receiving member,
thereby causing said adjusting plate to move and said pressure receiving member to be slanted via said transmitting member.

29. The molding method according to Claim 21,
wherein said molded product is an optical device,
wherein said supporting plate has an upper plate (4),
wherein said pressure receiving member has a pressure receiving plate (3),
wherein said fixed fulcrum has a first true sphere (7),
wherein said pressure receiving plate is fixed onto said upper plate via said first true sphere,
wherein said adjusting plate comprises a first adjusting plate (8) and a second adjusting plate (8a),
wherein each respective adjusting plate of said first adjusting plate and second adjusting plate has a slanting surface with a slanting angle,
wherein said each respective adjusting plate is located between an upper surface of said pressure receiving plate and said upper plate,
wherein said transmitting member comprises a second true sphere (7a) and a third true sphere (7b),
wherein said second true sphere is disposed between a slanting surface of said first adjusting plate and an upper surface of said pressure receiving plate,
wherein said third true sphere is disposed between a slanting surface of said second adjusting plate and an upper surface of said pressure receiving plate,
wherein each respective true sphere of said first true sphere, second true sphere and third true sphere is located at the apexes of a regular triangle,
wherein said operating member comprises a first operating member to move said first adjusting plate and a second operating member to move said second adjusting plate, and
wherein said step of adjusting a gradient of said pressure receiving member comprises the step of:
moving said respective adjusting plates in parallel with one another when said each respective operating member is manipulated;
slanting said pressure receiving plate up and down via said each respective true sphere with said first true sphere acting as a pivot as said each respective adjusting plate is being moved; and
making an adjustment of parallelism of said pressure receiving plate.

30. The molding method according to Claim 21,
wherein said molded product is an optical device,
wherein said supporting plate comprises an upper plate (4) and a side plate (29),
wherein said pressure receiving member has a pressure receiving block (15),
wherein said adjusting plate comprises a first adjusting plate (8) and a second adjusting plate (8a),
wherein said each respective adjusting plate of said first adjusting plate and second adjusting plate has a slanting surface with a gradient,
wherein said transmitting member comprises a second true sphere (7a) and a third true sphere (7b),
wherein said each respective adjusting plate is located between a side surface of said pressure receiving block and said side plate,
wherein said second true sphere is disposed between a slanting surface of said first adjusting plate and a side surface of said pressure receiving block,
wherein said third true sphere is disposed between a slanting surface of said second adjusting plate and a side surface of said pressure receiving block,
wherein said fixed fulcrum, second true sphere and third true sphere are located on the apexes of a regular triangle, respectively,
wherein said operating member comprises a first operating member to move said first adjusting plate and a second operating member to move said second adjusting plate, and
wherein said step of adjusting a gradient of said pressure receiving member comprises the step of:
moving said each respective adjusting plate up and down when said each respective operating member is manipulated;
having said pressure receiving block slanted in a horizontal direction via said each respective true sphere with said fixed fulcrum acting as a pivot as said each respective adjusting plate is being moved; and
making an adjustment of parallelism of said pressure receiving block.

31. The molding method according to Claim 21,
wherein said parallelism adjustment mechanism further comprises a shifting amount measurement mechanism, and
wherein said step of adjusting a gradient of said pressure receiving member comprises the step of measuring an amount of shifting of said each respective adjusting plate and making a confirmation thereof by means of said shifting amount measurement mechanism.

32. The molding method according to Claim 21,
wherein said parallelism adjustment mechanism further comprises an automatic control means to control a shifting amount, and
wherein said step of adjusting a gradient of said pressure receiving member comprises the step of detecting a deviation of said pressure applying plate from a reference plane in parallelism and determining an amount of shifting of said each respective adjusting plate automatically by means of said automatic control means.

33. The molding method according to Claim 21,
wherein said transmitting member comprises a second pair of seats (6a, 16a), a third pair of seats (6b, 16b), a second true sphere (7a) disposed between said second pair of seats and a third true sphere (7b) disposed between said third pair of seats,
wherein one seat (16a) of said second pair of seats is fixed onto said pressure receiving block,
wherein one seat (16b) of said third pair of seats is fixed onto said pressure receiving block, and
wherein said step of adjusting a gradient said pressure receiving member comprises the step of making other seats (6a, 6b) of said pairs of seats slide along said slanting surface of said each respective adjusting plate as said each respective adjusting plate is being moved and making said pressure receiving plate slant via said second true sphere and third true sphere as said other seats are sliding.

34. The molding method according to Claim 21,
wherein said upper die and lower die are adjusted to an error of 1 µm minimum in parallelism therebetween.

35. The molding method according to Claim 21,
wherein said adjusting plate comprises two adjusting plates of a first adjusting plate and a second adjusting plate, and
wherein said fixed fulcrum, first adjusting plate and second adjusting plate are located on the apexes of a regular triangle, respectively.
